# EUROPÄISCHE PATENTSCHRIFT

(11) **EP 3 017 885 B1**
(45) Veröffentlichungstag und Bekanntmachung des Hinweises auf die Patenterteilung: **08.04.2020**
(21) Anmeldenummer: 14192268.2
(22) Anmeldetag: 07.11.2014
(51) Int. Cl.: B08B 9/027, B08B 9/049, B08B 9/032, B05B 13/06, B05B 3/00, H04N 5/225, H04N 5/217, H04N 7/18

(54) **Vorrichtung zur Reinigung von Rohren**
Device for cleaning tubes
Dispositif de nettoyage de tuyaux

(43) Veröffentlichungstag der Anmeldung: 11.05.2016
(73) Patentinhaber: IMS Robotics GmbH, 01458 Ottendorf-Okrilla (DE)
(72) Erfinder: Bauer, Jens, 01465 Langebrück (DE); Hache, Thomas, 01239 Dresden (DE)
(74) Vertreter: Sperling, Thomas

(56) Entgegenhaltungen:
- EP-A1- 2 278 082
- WO-A1-96/26020
- DE-U1-202010 016 857
- US-A1- 2005 045 751

## Beschreibung

Die Erfindung betrifft eine Vorrichtung zur Reinigung von Rohren, insbesondere von Abwasserrohren von Haushaltsabwässern oder Industrieabwässern.

Inkrustationen, Ablagerungen, Biofilme und Einragungen an Wandungen in Rohrsystemen stellen in Abwasserkanälen, Wasserbehandlungsanlagen im Grundwassersanierungsbereich und in industriellen Anlagen ein erhebliches Problem dar. Im unterirdischen Kanalsystem können durch Bauschäden bei Straßenarbeiten, zum Beispiel durch eingedrungenen Beton und durch Risse, eingewachsene Baumwurzeln zu Verschlüssen führen. Nach Starkregenereignissen setzen sich die Kanäle mit Blättern, Unrat und ähnlichem zu. Industrielle, kommunale und bergbauliche Abwässer enthalten regelmäßig ein großes Angebot an mikrobiell verwertbaren Nährstoffen, was zu einem überproportional starken Wachstum von Biofilmen an den Rohrwandungen bis hin zu Rohrverschlüssen führt. Die Reinigungsleistung von Wasserbehandlungsanlagen wird herabgesetzt, die Qualität des behandelten Wassers wird eingeschränkt, es entstehen hohe Kosten durch Betriebsunterbrechung für aufwendige Reinigungsarbeiten.

Entwässerungseinheiten und Drainagen von Tunnelsystemen und Straßen in Hanglagen sind von diesen Problemen ebenfalls betroffen. Hier kann eine Sperrung für Wartungs- oder Sanierungsarbeiten bereits eine volkswirtschaftliche Belastung darstellen.

Durch das Eindringen von Fremdkörpern beziehungsweise den Verschluss der Rohre können Leitungen teilweise nicht oder nur eingeschränkt benutzt werden. Leitungen, die verschlossen sind, können nur mit erheblichem Aufwand oder teilweise gar nicht von diesen Fremdkörpern beseitigt werden, zum Beispiel unter Straßen, Häusern, Trafostationen, Mauern und so weiter.

Die konventionellen Reinigungsmethoden wie mechanische Reinigung oder normale Spültechnik werden an ihre Grenzen geführt. Mechanische Reinigung bedingt die Gefahr der Beschädigung des Bestandsrohrs. Dies betrifft auch die Spültechnik, die neben Spüldüsen zusätzlich Schleuderketten verwendet. Die Spültechnik erbringt unter Umständen nur eine unzureichende Reinigungsleistung bei hartnäckigen Inkrustationen oder bei Belägen an der Rohrwandung durch Biofilme. Die hohen Standzeiten in den vorgeschriebenen Wartungsintervallen verursachen durch längerfristige Reinigungsarbeiten für den Betreiber der Rohrsysteme wirtschaftliche Verluste.

Zur Beseitigung solcher Störstellen sind verschiedene Vorrichtungen und Verfahren bekannt. Grundsätzlich unterscheidet man hierbei zwischen mechanischen, chemischen und hydrodynamischen Rohrreinigungsanlagen beziehungsweise -verfahren.

Bei der mechanischen Rohrreinigung werden flexible Spiralen von Hand in das Rohr eingebracht und meist durch einen elektrischen Antrieb in Rotation versetzt. Dabei werden auch feste Ablagerungen von den Rohrinnenwänden beseitigt. Diese Vorrichtungen sind weit verbreitet, stoßen aber dort an ihre Grenzen, wo die Inkrustationen schlaghärter als die Rohrwandung selbst sind. Dies betrifft insbesondere Kunststoffrohre, bei denen sich im Laufe der Jahre der Weichmacher verflüchtigt hat und eine Versprödung des Rohres die Folge ist. Eine Schlagbeanspruchung durch mechanische Rohrreinigungssysteme kann hier zum Bruch des Rohres führen.

Bei der chemischen Rohrreinigung besteht die Absicht, die Inkrustationen aufzulösen. Dazu werden spezielle Reinigungsflüssigkeiten, meist Säuren einer bestimmten Konzentration, in das Rohr eingebracht. Der Reinigungserfolg ist dabei aber sehr unbestimmt, da die chemischen Reaktionen im zu reinigenden Rohr unkontrolliert ablaufen. Unter Umständen muss dieser Reinigungsvorgang öfters wiederholt werden, bis die erwünschte Reinigungswirkung erzielt wird. Nachteilig ist dabei auch die erhebliche Belastung der Umwelt durch die verwendeten Chemikalien.

Die hydrodynamische Rohrreinigung hat sich vor allem bei der Kanalreinigung etabliert. Dabei wird ein Spülkopf in das zu reinigende Rohr eingebracht und über einen an diesen angeschlossenen Spülschlauch eine unter Druck stehende Reinigungsflüssigkeit zugeführt. Dabei dient die Reinigungsflüssigkeit nicht nur zum Reinigen der Rohrwände, sondern erzeugt eine auf das Rückstoßprinzip beruhende Vorschubbewegung des Spülkopfes. Dazu weisen die Spülköpfe mehrere nach hinten gerichtete Bohrungen auf, so dass mit Austritt der Hochdruckflüssigkeitsstrahlen zum einen die Verschmutzungen der Rohrinnenwände gereinigt werden und zum anderen der Spülkopf eine Vorschubbewegung erfährt. Der Spülkopf muss also nur in eine Startöffnung eingeführt werden und bewegt sich dann von selbst durch das Rohrsystem. Bei diesen Systemen wird der größte Teil der Arbeitsflüssigkeit für den Vorschub benötigt, wobei die Arbeitsflüssigkeit mit großer Geschwindigkeit in entgegengesetzter Bewegungsrichtung zum Spülkopf an die Rohrleitung gelangt.

Zum Entfernen harter Inkrustationen, wie zum Beispiel Kalk- und Urinstein, an den Rohrwänden ist ein Druckstrahl hoher kinetischer Energie notwendig, das heißt, es werden Drücke von bis zu mehreren Hundert bar notwendig. Zwar werden auch solche Spülkopfe mit hohen Drücken von bis zu 200 bar und mit hohen Durchflussmengen von mehreren 100 l/min bis zu 1400l/min betrieben, jedoch wird die Energie, die aus den Düsen austritt, nur zu einem Bruchteil in Reinigungsleistung umgesetzt. Der überwiegende Teil dient zum Vortrieb des Spülkopfes und zum Abtransport lose aufliegender Fremdkörper, wie zum Beispiel lose Steine, Kies und Sand, die durch den Spülstrom abgeleitet werden.

Bei der Höchstdruck-Wasserstrahlrobotik tritt ein rotierender Flüssigkeitsstrahl unter hohem Druck und hoher Geschwindigkeit auf das abzutragende Material. Dabei wird der größte Teil der kinetischen Energie zur Beseitigung der Störstelle benutzt. Die Höchstdruck-Wasserstrahlrobotik leitet sich aus dem Verfahren des Wasserstrahlschneidens ab. Beim Wasserstrahlschneiden wird das zu bearbeitende Material durch einen Hochdruckwasserstrahl getrennt. Dieser Strahl hat einen Druck von bis zu 6000 bar und erreicht Austrittsgeschwindigkeiten von bis zu 1000 m/s. Mit dem Hochdruckwasserstrahlverfahren können fast alle Materialien bearbeitet werden, angefangen beim Schaumstoff bis hin zum Saphir. Schwerpunkte sind beim Wasserstrahlschneiden die Kunststoffbearbeitung, die Metallbearbeitung, die Lederbearbeitung und die Steinbearbeitung. Durch die Möglichkeit des Schwenkens des Schneidkopfes (3D-Bearbeitung) lassen sich mittels einer Schneidvektorsteuerung fast beliebig komplizierte Formen auch im Raum schneiden.

In der DE 20 2014 000 026 U1 ist eine Vorrichtung zum Bearbeiten von Kanalwandungen von geschlossenen Kanälen mittels Hochdruckflüssigkeitsstrahlen mit einem Düsenkörper mit zumindest einer Strahldüse beschrieben. Die Strahldüse ist am vorderen Ende der Vorrichtung angeordnet und dient der Erzeugung eines nach vorn gerichteten, gebündelten Strahls eines flüssigen Strahlmediums. Die Ausrichtung eines Strahls nach vorn schließt ein, dass die Strahlrichtung mit der Kanalachse übereinstimmt und ebenso, dass der Strahl oder die Strahlen einen Winkel von -90° < a < 90°, bezogen auf die Kanalachse aufweisen, je nach Art und Umfang der zu beseitigenden Hindernisse und Anhaftungen. Als gebündelter Strahl wird dabei ein mittels Düsenöffnung im Durchmesser stark begrenzter Strahl angesehen, mit dem eine lokal begrenzte hohe Kraft auf das abzutragende Material ausgeübt werden kann. Um großflächige Materialien abzutragen, wird entweder eine größere Anzahl von Düsen verwendet und/oder die Fläche wird durch Bewegung der Düse oder des Strahls überstrichen. Ein Überstreichen wird beispielsweise durch eine Rotationsdüse erzielt, bei der entweder der Düsenkörper selbst rotiert oder im Düsenkörper im Bereich des Strahlaustritts ein beispielsweise fingerartiger Einsatz im Hohlraum vor dem Austritt rotiert, so dass der austretende Strahl kreiselt und im Ergebnis einen kegelförmigen Strahl bildet. Die Vorrichtung umfasst einen Fahrwagen zum Bewegen und Positionieren des Düsenkörpers im Kanal und mit einer Medienzufuhr zur Versorgung der Strahldüse mit dem unter Hochdruck stehenden Strahlmedium. Der Fahrwagen sowie der Düsenkörper sind derart ausgebildet, dass beide zumindest entlang ihrer gesamten Unterseite mit einem Abstand zur Wandung des Kanals positionierbar sind. Am hinteren Teil des Fahrwagens ist ein pneumatisch oder hydraulisch aktivierbares Fixierpolster angeordnet, welches derart ausgebildet ist, dass es im aktivierten Zustand die Position des Fahrwagens durch Verpressen des Fixierpolsters im Kanal fixiert, ohne den Kanal zu verschließen.

Die Höchstdruck-Wasserstrahlrobotik ist in der Rohrreinigung ein noch sehr junges Verfahren. Es wird mit einem Arbeitsdruck von 1000 bis 2500 bar gearbeitet. Marktverfügbar für die Höchstdruck-Wasserstrahlrobotik ist zum Beispiel das System der Mauerspecht GmbH. Das Drain-Jet Robotics® System ist für Rohrquerschnitte ab DN 180 konzipiert und ermöglicht kontrolliertes und kameraunterstütztes Entfernen von Rückständen. Dies erfolgt in wesentlich kürzerer Zeit als herkömmliche Fräsroboter oder hydrodynamische Rohrreinigungssysteme leisten können. Das Schneiden von Inlinern, Entfernen von Kalk- und Betonablagerungen sowie das Schneiden von Stahlfremdkörpern ist in sehr hoher Qualität möglich. Das System ist jedoch in seinem Anwendungsbereich beschränkt, da es nur in geraden Rohren und bei Muffenversätzen erst ab DN 250 eingesetzt werden kann.

Aus der DE 10 2009 007 946 A1 ist eine Vorrichtung zum hydrodynamischen Reinigen der Innenwände von Rohren, insbesondere von wasserführenden Rohren im Hausbereich bekannt, die eine relativ zum Rohr bewegbare Hochdruckreinigungsdüse und einen daran angeschlossenen Hochdruckreinigungsschlauch für die Zufuhr einer unter Druck stehenden Reinigungsflüssigkeit, insbesondere Wasser, umfasst. Die Reinigungsvorrichtung weist des Weiteren eine biegbare, jedoch druckstabile stab- oder stangenförmige Schiebevorrichtung auf, an deren einem Ende die Hochdruckreinigungsdüse angeordnet ist und die zum Hineinschieben der Hochdruckreinigungsdüse in das zu reinigende Rohr geeignet ist. Die Reinigungsvorrichtung kann darüber hinaus ein rohrgängiges Fahrwerk umfassen, auf welchem die Hochdruckreinigungsdüse und/oder ein Teil der Längserstreckung des Hochdruckschlauchs befestigt ist/sind. Die Arbeiten können mit einer Kamera mit angeschlossener Videodatenleitung überwacht werden, die in der nahen Umgebung der Hochdruckreinigungsdüse angebracht ist. Dabei wird die Hochdruckreinigungsdüse mit Hilfe der stab- oder stangenförmigen Schiebevorrichtung zur reinigenden Stelle geschoben. Dieses System arbeitet in der Regel mit einem Druck von 100bar bis maximal 500bar.

Als ein weiteres System sind lenkbare Satelliten-Spülkameras am Markt erhältlich. Diese Systeme nutzen den nach hinten zur Rohrwandung gerichteten Niederdruckwasserstrahl, um sich in das Rohr zu bewegen. Als Zusatznutzen wird eine gewisse Reinigungswirkung des rückliegenden Rohres erzielt. Um fachgerecht den Zustand und damit Rückschlüsse auf eine korrekte Funktionstüchtigkeit beziehungsweise Dichtigkeit der Rohre überprüfen zu können, muss ein weiterer Kamerabefahrungsvorgang durchgeführt werden. Feste Ablagerungen, einragende Hindernisse können mit so einem System nicht beseitigt werden.

Aus der DE 20 2010 016 857 U1 ist eine Hochdruck-Wasserstrahlvorrichtung bekannt, bei der an einem flachen Fahrwagen, der sich auf vier Rädern in Fahrtrichtung fortbewegt, eine Düsenhalterung frontseitig montiert ist. Die Düsenhalterung hält eine Düse mit mehreren senkrecht zur Fahrtrichtung und damit radial in einem Kanal ausgerichteten Düsenöffnungen. Die Düsenhalterung umfasst einen Schwenkarm, der an der Vorderfront des Fahrwagens montiert ist. Mittels des Schwenkarms ist die Düse zum Beispiel in zwei rechtwinklig zur Fahrtrichtung und zueinander liegenden Richtungen beweglich. Die Düse ist darüber hinaus um ihre horizontale, zur Fahrtrichtung parallel liegende Schwenkachse, die zum Beispiel die Achse der Düse sein kann, um 360° schwenkbar. Wenn ein fester Anschluss der Medienzufuhr an der Düse vorliegt, werden die 360° von der Düse alternierend überstrichen. Des Weiteren ist eine Kamera vorgesehen, die zur Erfassung der Umgebung, zum Beispiel von Verzweigungen im Kanal oder von Hindernissen geeignet ist, so dass entsprechend der aktuell festgestellten Situation vorprogrammierte Reaktionen der Vorrichtung oder Meldungen an einen Bediener außerhalb des Kanals erfolgen können. Eine Kamera kann ebenso die Bediensteuerung erfassen, indem die aufgenommenen Bilder zum Bediener übertragen werden.

In der DE 20 2011 000 650 U1 ist eine Vorrichtung zum Untersuchen und Reinigen von Rohren und Leitungen, insbesondere von Abwasserleitungen, beschrieben, bei der ein Reinigungskopf vorgesehen ist, der zusätzlich mit einer Kamera ausgerüstet ist, wobei beides am Ende eines Hochdruckschlauchs angeordnet ist. Der Reinigungskopf weist eine oder mehrere am Umfang angeordnete Düsen auf, die wahlweise ansteuer- und schaltbar ausgebildet sind. Mit diesen Düsen lässt sich der Reinigungskopf gezielt in eine Richtung bewegen. So kann diese sehr einfach in Abzweigungen von Rohren einfahren. Zur Kontrolle der Position wird das Kamerabild herangezogen. Die Düse beziehungsweise die Düsen am Umfang kann/können rotierbar ausgebildet sein, wobei diese durch einen Motor angetrieben werden können. Die rotierbare Düse kann immer genau in die Richtung gedreht werden, zu der entgegengesetzt der Reinigungskopf bewegt werden soll. Es ist gemäß einer Variante auch möglich, die Umfangsdüse(n) mittig auf der Mittelachse des Reinigungskopfes anzuordnen und um diese Mittelachse drehbar zu lagern.

Am Markt verfügbar sind von mehreren Herstellern angebotene Kanalfräsroboter, welche für die vorbereitenden und die abschließenden Arbeiten zur Kanalsanierung eingesetzt werden. Hierbei wird der Roboter mit einem Fräsmotor ausgerüstet, welcher elektrisch, hydraulisch oder pneumatisch angetrieben wird. Für die abzutragenden Materialien werden speziell dafür konzipierte Fräswerkzeuge montiert. Mit diesen Fräswerkzeugen ist nur ein punktueller Abtrag der Materialien möglich. Durch die manuelle Steuerung und die Fräseigenschaften der Werkzeuge ist ein berührungsfreies Arbeiten zum Altrohr und damit zerstörungsfreies Arbeiten nicht oder nur unter sehr großem Zeitaufwand möglich.

Als eine weitere marktübliche Verfahrensweise wird das Entfernen von Hindernissen im Altrohr mittels Seil- und Kettenschleuder angewendet. Kettenschleudern werden zur Beseitigung von festen Ablagerungen wie Kalk, Zementschlämmen, Wurzeln usw. eingesetzt. Dabei rotiert die Antriebsdüse mit der gleichen Geschwindigkeit wie die Ketten. So entsteht eine genau definierte Schleifwirkung im Rohr. Obwohl die Ketten immer der entsprechenden Rohrgröße angepasst werden sollen, wird die Oberfläche des Altrohres meist in Mitleidenschaft gezogen. Der gesamte Arbeitsvorgang kann mittels Kamera nicht permanent überwacht werden. Eine Kontrolle des Ergebnisses findet immer erst am Ende durch eine separat durchgeführte Kamera-Befahrung statt. Bei unzureichendem Reinigungsergebnis muss der Arbeitsgang dann gegebenenfalls wiederholt werden.

Die Aufgabe der Erfindung besteht darin, eine Vorrichtung zur Reinigung von Rohren bereitzustellen, die bogengängig und/oder selbstfahrend in Rohren bewegbar und für die Reinigung von Abwasserrohren für Haushaltsabwässer und für Industrieabwässer sowie für andere Rohre, zum Beispiel Drainagen, geeignet ist. Durch die Vorrichtung soll die Beseitigung von Verunreinigungen durch eine ferngesteuerte Ausrichtung eines Hochdruck-Düsenstrahls auf die Verunreinigung unter Kamerabeobachtung erreichbar sein. Die Vorrichtung soll eine gezielte, punktgenaue Reinigung ermöglichen. Dafür ist eine gezielte Ausrichtung der Düse entlang mehrerer Achsen erforderlich, mindestens:
- in axialer Richtung,
- schwenkend im Winkel bezüglich der Längsachse des Rohres und
- als Rotation um die Längsachse des Rohres.

Eine besondere, durch die Erfindung zu überwindende Schwierigkeit resultiert daher, dass für die Übertragung eines Hochdruckmediums ein armierter Schlauch erforderlich ist, der zwar biegbar für die Schwenkbewegung, aber zu torsionssteif ist, als das durch seine Verdrehung die Rotation als Drehbewegung erzeugt werden könnte. Eine Verdrehung des Schlauchs um mehr als 400° ist ausgeschlossen, so dass auf diese Weise eine Endlosrotation der Düse um die Rohrlängsachse unmöglich ist.

Die Aufgabe der Erfindung wird gelöst durch eine Vorrichtung zum Reinigen von Rohren nach Anspruch 1. Eine erfindungsgemäße Vorrichtung umfasst:
- eine relativ zur Innenwand eines Rohrs in mindestens drei Achsen bewegbare Düse zur Erzeugung eines Strahls eines fluiden Reinigungsmediums auf einen beliebigen Punkt der Innenwand des Rohrs,
- einen an die Düse angeschlossenen Reinigungsschlauch für die Zufuhr des fluiden Reinigungsmediums, wobei die Düse an einem vorderen Endbereich des Reinigungsschlauchs angebracht ist und die Düse mit dem angeschlossenen Reinigungsschlauch entlang einer parallel zur Rohrachse verlaufenden Längsachse innerhalb des Rohrs axial bewegbar ist,
- mindestens eine Schwenkeinrichtung für die Auslenkung der Düse in einem Winkel zur Längsachse, vorzugsweise zwischen 0° und ± 90°, unter Biegung des vorderen Endbereichs des Reinigungsschlauchs und von dessen Schlauchachse mit einer Biegungsrichtung in einer Biegungsebene,
- mindestens eine Einrichtung für die Auslenkung der Düse um die Längsachse durch Änderung der Biegungsrichtung und der Biegungsebene des vorderen Endbereichs um die Längsachse ohne Torsion des Reinigungsschlauchs, und mindestens eine Kamera für die Erfassung von Verschmutzungen und die Beobachtung der Auslenkung und Ausrichtung der Düse.

Gemäß der Erfindung ist am Reinigungsschlauch mindestens ein Mittel für die Verhinderung der Torsion des Reinigungsschlauchs vorgesehen. So ein Mittel zur Verhinderung der Torsion kann eine Lagerung, zum Beispiel ein Kugellager oder Gleitlager, oder eine Drehdurchführung am Reinigungsschlauch sein. Eine Vorrichtung mit mindestens einer Drehdurchführung und mindestens einer Lagerung am Reinigungsschlauch für die Verhinderung einer Torsion des Reinigungsschlauchs ist ebenfalls möglich.

Gemäß der Konzeption der Erfindung ist diese Vorrichtung durch die axiale Bewegbarkeit, die Schwenkeinrichtung und die Einrichtung für die Auslenkung der Düse um die Längsachse in der Lage, die Düse und den Endbereich des Reinigungsschlauchs in mindestens drei Dimensionen auszurichten.

Nach der Erfindung umfasst die Einrichtung für die Auslenkung der Düse um die Längsachse mindestens einen Drehantrieb für die Drehung der Schwenkeinrichtung um den Reinigungsschlauch und um die Längsachse. Dabei ist mindestens eine Lagerung für die Schwenkeinrichtung am Reinigungsschlauch und/oder der Düse vorgesehen, mittels der die Schwenkeinrichtung um den Reinigungsschlauch und dessen vorderen Endbereich und um die Düse, das heißt die Düsenachse, ohne Torsion des Reinigungsschlauchs drehbar ist. Die Düse dreht sich bei der Drehung der Schwenkeinrichtung um den Reinigungsschlauch nicht um die eigene Achse, da die Düse fest mit dem vorderen Endbereich des Reinigungsschlauchs verbunden ist. Durch die Drehung der Schwenkeinrichtung ist die Biegung des vorderen Endbereichs des Reinigungsschlauchs in einer der jeweiligen Drehposition der Schwenkeinrichtung um den Reinigungsschlauch entsprechenden Biegungsebene und Biegungsrichtung einstellbar. Die Schwenkeinrichtung, die um den Reinigungssschlauch endlos rotierbar ist, kann die Düse so in alle Richtungen um die Längsachse auslenken.

In einer Ausführungsform der Erfindung umfasst die Einrichtung für die Auslenkung der Düse um die Längsachse eine Drehdurchführung, die zwischen Düse und Reinigungsschlauch oder an beliebiger Stelle zwischen zwei Schlauchabschnitten des Reinigungsschlauchs positioniert sein kann, wodurch die Düse um die Längsachse ohne Torsion des Reinigungsschlauchs rotierbar ist.

Gemäß einer vorteilhaften Ausführungsform der Erfindung ist die Kamera mit einem Schwenkantrieb als Schwenkeinrichtung derart verbunden, dass sie durch den Schwenkantrieb schwenkbar und zusammen mit dem Schwenkantrieb drehbar ist. Vorzugsweise weist die Kamera eine Einheit für eine permanente Kamerareinigung auf. In einer bevorzugten Ausführungsform der Erfindung umfasst der Schwenkantrieb einen schwenkbar auf einer quer zur Längsachse positionierten Schwenkachse gelagerten Schwenkarm sowie einen Schwenkantriebsmotor. Gemäß einer vorteilhaften Variante dieser Ausführungsform der Erfindung ist auch die Kamera auf dem Schwenkarm platziert und zusammen mit dem Schwenkarm ausrichtbar. Somit kann die Kamera auch der Bewegung der Reinigungsdüse und des gebündelten Strahls folgen. Entsprechend einer alternativen Ausführungsform ist die Kamera separat, das heißt, unabhängig vom Schwenkantrieb und vom Schwenkarm ausrichtbar.

Entsprechend einer weiteren vorteilhaften Ausgestaltung der erfindungsgemäßen Vorrichtung umfasst diese ein Gehäuse, durch das der Reinigungsschlauch entlang der Längsachse, die durch das Gehäuse verläuft, hindurchgeführt ist. Vorteilhafterweise ist das Gehäuse oder zumindest ein Teil davon um den Reinigungsschlauch, genauer gesagt, den Abschnitt des Reinigungsschlauchs, der im Gehäuse platziert ist und entlang der Längsachse verläuft, drehbar ausgebildet. Vorteilhaft weist das Gehäuse eine Verbindung mit einem Schwenkantrieb als Schwenkeinrichtung auf. Diese Verbindung ist derart ausgebildet beziehungsweise führt dazu, dass eine Drehbewegung des Gehäuses um den Reinigungsschlauch zu einer entsprechenden Drehbewegung des Schwenkantriebs um den Reinigungsschlauch und gegebenenfalls die Düse führt.

Vorzugsweise sind für eine axiale Bewegung der Reinigungsdüse entlang der beziehungsweise parallel zur Längsachse ein oder mehrere axiale Antriebe vorgesehen. Dabei stellt die axiale Bewegung eine Dimension dar, entlang der die Düse ausgerichtet werden kann.

Ein solcher axialer Antrieb kann eine oder mehrere nach hinten gerichtete Bohrungen oder Düsen umfassen, die vorzugsweise an der Hinterseite des Gehäuses platziert sind, und zu denen das fluide Reinigungsmedium zuführbar ist. Mittels dieser Bohrungen oder Düsen ist eine auf dem Rückstoßprinzip beruhende Vorschubbewegung der Vorrichtung durch das aus den Bohrungen oder Düsen ausströmende fluide Reinigungsmedium erzeugbar. Dabei ist vorzugsweise ein Ventil für eine geregelte oder gesteuerte Verteilung des fluiden Reinigungsmediums zwischen der vorderen Düse und den nach hinten gerichteten Bohrungen oder Düsen vorgesehen. Alternativ können auch zwei separate Regelungen für die Zuführung des Reinigungsmediums vorgesehen sein, zur vorderen Düse einerseits und zu den hinteren Bohrungen oder Düsen andererseits.

Die Vorrichtung kann auch durch den Vorschub des Reinigungsschlauchs oder eines Schiebeschlauchs axial bewegbar sein. Alternativ ist die Vorrichtung in axialer Richtung expandierbar ausgebildet, so dass auf diese Weise ein axialer Vorschub der Düse parallel zur Längsachse realisiert werden kann.

Die Vorrichtung kann auch Räder zur Unterstützung einer axialen Bewegung der Vorrichtung aufweisen, die auch als Teil eines Fahrantriebs hinter dem Gehäuse platziert werden können.

Nach einer Weiterbildung der Erfindung weist die Vorrichtung eine radial im Rohr expandierbare Festsetzungseinheit auf, die bei maximaler Expansion eine Festsetzung der Vorrichtung durch Druck der Festsetzungseinheit an die Innenwand des Rohres ermöglicht. Eine solche Festsetzungseinheit ist geeignet, dem durch den Strahl der vorderen Düse verursachten Rückstoß beziehungsweise einer axialen Bewegung der Vorrichtung entgegenzuwirken. Gleichzeitig sind an der Festsetzungseinheit auch bei maximaler Expansion Aussparungen vorgesehen, die einen Abflussweg für das fluide Reinigungsmedium und für die Verschmutzungen an der Vorrichtung vorbei, vorzugsweise zwischen Festsetzungseinheit und Innenwand des Rohrs, bereithalten.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- **Figur 1:**: eine Vorrichtung zur Reinigung von Rohren mit einer Reinigungsdüse,
- **Figur 2:**: eine Längsschnitt-Darstellung der Vorrichtung zur Reinigung von Rohren mit einer Detailansicht eines Drehantriebs und eines Schwenkantriebs für die Reinigungsdüse,
- **Figur 3:**: eine schematische Darstellung der Drehung des Schwenkantriebs um den Reinigungsschlauch,
- **Figur 4:**: eine Vorrichtung zur Reinigung von Abwasserohren mit einer Reinigungsdüse und mit aktivierter Festsetzungseinheit,
- **Figur 5:**: eine Querschnittsansicht der aktivierten Festsetzungseinheit,
- **Figur 6:**: eine Längschnitt-Darstellung der Vorrichtung zur Reinigung von Rohren mit Rädern,

- **Figur 7:**: eine Längsschnitt-Darstellung einer Vorrichtung zur Reinigung eines Rohres mit mehreren Schwenkantrieben um die Längsachse und
- **Figur 8:**: die Längsschnittdarstellung einer Vorrichtung zur Reinigung von Rohren mit einer Drehdurchführung und
- **Figur 9:**: eine schematische Darstellung der punktuellen Ausrichtung des Strahls der Düse auf eine Verschmutzung an der Innenwand des Rohrs unter Kamerabeobachtung.

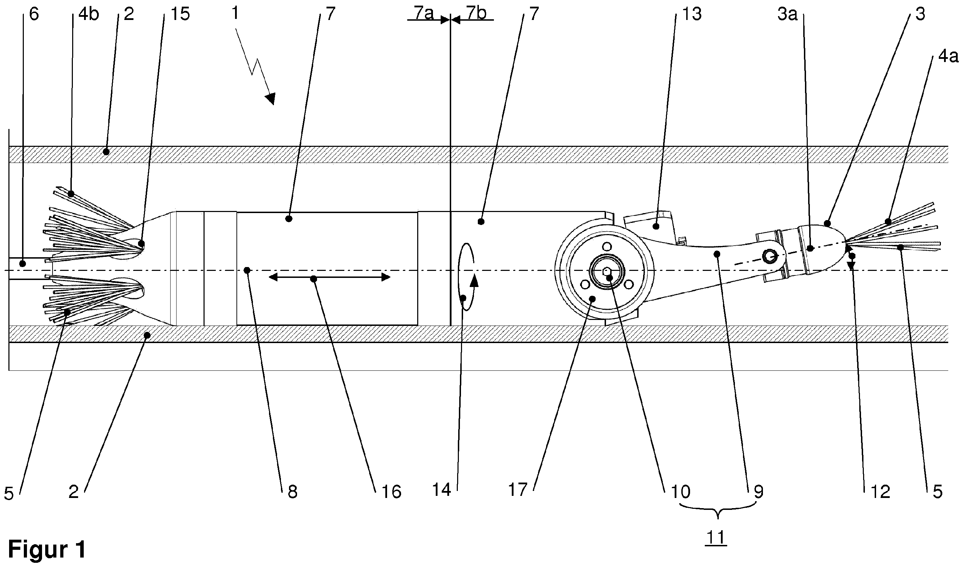

Die **Figur 1** zeigt eine Vorrichtung 1 zur Reinigung eines Rohres 2. Diese Vorrichtung 1 umfasst eine relativ zur Innenwand des Rohres 2 bewegbare Düse 3 zur Erzeugung eines nach vorn gerichteten, gebündelten Strahls 4a eines fluiden Reinigungsmediums 5, beispielsweise in Form von Wasser. Des Weiteren umfasst die Vorrichtung 1 einen an die Düse 3 angeschlossenen Reinigungsschlauch 6, vorzugsweise einen Hochdruckreinigungsschlauch 6, für die Zufuhr des fluiden Reinigungsmediums 5. Darüber hinaus umfasst die Vorrichtung 1 ein Gehäuse 7, in dem der Reinigungsschlauch 6 entlang einer durch das Gehäuse 7 verlaufenden Längsachse 8 durch das Gehäuse 7 hindurchgeführt ist, was in der Figur 1 nicht detailliert dargestellt ist. Die Düse 3 ist an einem vorderen, ebenfalls in Figur 1 nicht dargestellten Endbereich 6a des Reinigungsschlauchs 6 angebracht, der sich außerhalb des Gehäuses 7, das heißt vor dem Gehäuse 7, befindet. Ein beweglicher Schwenkarm 9 ist mit dem vorderen Endbereich 6a des Reinigungsschlauchs 6 nahe der Düse 3 verbunden. Der bewegliche Schwenkarm 9 ist an einer Schwenkachse 10, die quer zur Längsachse 8 am vorderen Teil 7b des Gehäuses 7 positioniert ist, schwenkbar gelagert. Für die Bewegung des Schwenkarms 9 um die Schwenkachse 10 ist ein Schwenkantriebsmotor vorgesehen, der sich innerhalb des Gehäuses 7 befindet. Der Schwenkarm 9, die Schwenkachse 10 und der Schwenkantriebsmotor bilden zusammen eine Schwenkeinrichtung 11. in Form eines Schwenkantriebes 11. Durch die Schwenkbewegung 12 des Schwenkarms 9 ist der vordere Endbereich 6a des Reinigungsschlauchs 6 mit der damit fest verbundenen Düse 3 bewegbar, das heißt auslenkbar in einem Winkel zur Längsachse 8. Für das gezeigte Ausführungsbeispiel liegt eine Biegung des vorderen Endbereichs 6a des Reinigungsschlauchs 6 vor, wobei diese Biegung in einer vertikalen Biegungsebene und mit einer Biegungsrichtung nach oben erfolgt. Damit kann eine Schwenkbewegung 12 beziehungsweise Auslenkung 12 der Düse 3 und des vorderen Endbereichs 6a des Reinigungsschlauchs 6 entlang einer in **Figur 1** durch den Pfeil angezeigte Schwenkrichtung 12 realisiert werden. Am Schwenkarm 9 ist im Bereich zwischen der Schwenkachse 10 und der Düse 3 eine Kamera 13 befestigt, deren Objektiv nach vorn ausgerichtet ist, so dass die Kamera 13 auftauchende Hindernisse und Verschmutzungen im Rohr 2 sowie die Ausrichtung der Düse 3 und des vorderen Strahls 4a des fluiden Reinigungsmediums 5 sowie dessen Wirkung erfassen kann. Das Gehäuse ist unterteilt in zwei Gehäuseteile 7a und 7b. Dabei ist der Gehäuseteil 7b um den Reinigungsschlauch 6 und die Längsachse 8 vorzugsweise endlos drehbar ausgebildet, wobei die Rotation 14 um die Längsachse 8 und um den Reinigungsschlauch 6 und durch den Rotationspfeil 14 dargestellt ist. Durch eine Verbindung des Gehäuses beziehungsweise Gehäuseteils 7b mit dem Schwenkantrieb 11 führt eine Drehbewegung des Gehäuseteils 7b um den Reinigungsschlauch 6 und die Längsachse 8 zu einer entsprechenden Drehbewegung des Schwenkantriebs 11 um den Reinigungsschlauch 6. Dies schließt eine Drehbewegung des Schwenkantriebs 11 um den vorderen Endbereich 6a und um die Düse 3 beziehungsweise die Achse 3a der Düse 3 ein. Die Düse 3 ist in der in **Figur 1** gezeigten Ausführungsform fest mit dem Reinigungsschlauch 6 verbunden und dreht sich daher bei der Drehbewegung 14 des Schwenkantriebs 11 um die Längsachse 8 und den Reinigungsschlauch 6 nicht um ihre eigene Achse 3a.

Das Reinigungsmedium 5 dient in der Vorrichtung 1 gemäß **Figur 1** nicht nur zum Reinigen der Wände des Rohrs 2, sondern erzeugt eine auf das Rückstoßprinzip beruhende Vorschubbewegung der Vorrichtung 1. Dazu weist die Vorrichtung 1 mehrere nach hinten gerichtete Bohrungen 15 auf, so dass mit Austritt der nach hinten gerichteten Strahlen 4b des Reinigungsmediums 5 zum einen die Verschmutzungen der Innenwände des Rohres 2 gereinigt werden und zum anderen die Vorrichtung 1 eine axiale Vorschubbewegung 16 entlang der Längsachse 8 erfährt. Zur Unterstützung der axialen Vorschubbewegung 16 beziehungsweise axialen Bewegung 16 des Reinigungsschlauchs 6 und der Vorrichtung 1 durch das Rohr 2 sind gemäß der **Figur 1** Räder 17 vorgesehen.

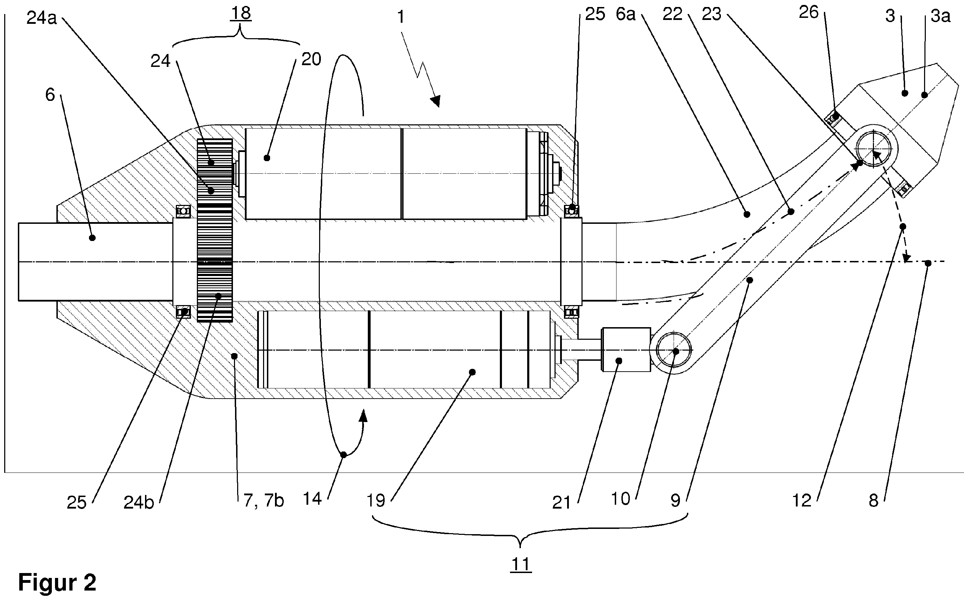

Die **Figur 2** zeigt eine Längsschnittdarstellung der Vorrichtung 1 zur Reinigung von Rohren mit einer Detailansicht eines Schwenkantriebs 11 sowie eines Drehantriebs 18 für die Drehung des Gehäuses 7 beziehungsweise des Gehäuseteils 7b und des Schwenkantriebs 11 um den Reinigungsschlauch 6. In diesem Ausführungsbeispiel kommen entsprechend einer bevorzugten Variante ein elektromotorischer Schwenkantrieb 11 mit einem Schwenkantriebsmotor 19 und ein elektromotorischer Drehantrieb 18 mit einem Drehantriebsmotor 20 zur Anwendung. Mit Hilfe des Schwenkantriebsmotors 19 ist der Schwenkarm 9 um die Schwenkachse 10 schwenkbar, was die Biegung des mit dem freien Ende des Schwenkarms 9 verbundenen vorderen Endbereichs 6a des Reinigungsschlauchs 6 ermöglicht. Eine solche Biegung hat eine Schwenkbewegung 12 der am vorderen Endbereich 6a des Reinigungsschlauchs 6 angebrachten Düse 3 zur Folge. Der Schwenkantriebsmotor 19 ist gemäß dem in **Figur 2** gezeigten Ausführungsbeispiel ein Spindelmotor 19 mit einer linear beweglichen Spindelmutter 21. Die lineare Bewegung der Spindelmutter 21 hat eine Schwenkbewegung des Schwenkarms 9 um die Schwenkachse 10 und damit eine Schwenkbewegung 12 beziehungsweise Auslenkung 12 der Düse 3 in einem Winkel zur Längsachse 8 unter Biegung des Endbereichs 6a des Reinigungsschlauchs 6 und von dessen Schlauchachse 22 mit einer Biegungsrichtung 23 in einer Biegungsebene zur Folge, wobei in **Figur 2** die Schlauchachse 22 entlang einer vertikal ausgerichteten Biegungsebene gebogen ist. Der Pfeil an der gebogenen Schlauchachse 22 zeigt eine Biegungsrichtung 23 in der vertikalen Ebene an, die nach oben verläuft.

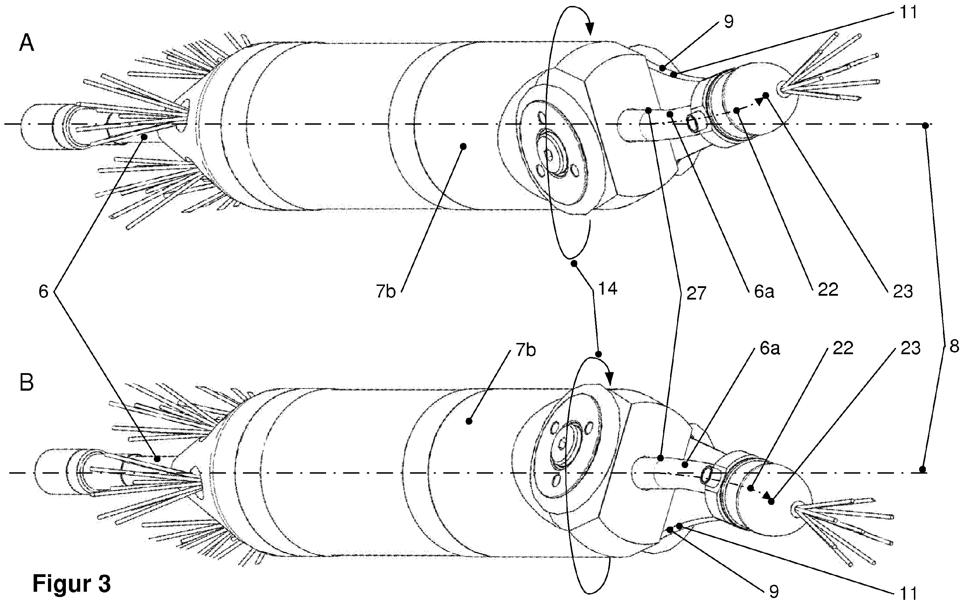

Die Drehung des Gehäuses 7 beziehungsweise des drehbaren Gehäuseteils 7b wird über einen Drehantriebsmotor 20 realisiert, der mit dem Gehäuseteil 7b fest verbunden ist. Über ein Zahnradgetriebe 24 ist das Gehäuseteil 7b in der Lage, infolge einer Rotationsbewegung des Drehantriebsmotors 20 um den Reinigungsschlauch 6 eine Rotationsbewegung 14 um die Längsachse 8 und den Reinigungsschlauch 6 auszuführen. Dazu ist ein erstes Zahnrad 24a auf der Drehachse des Drehantriebsmotors 20 angebracht. Dieses erste Zahnrad 24a korrespondiert mit einem zweiten Zahnrad 24b, das am Umfang des Reinigungsschlauchs 6 innerhalb des Gehäuses 7 befestigt ist. Durch die Rotationsbewegung 14 des Gehäuseteils 7b um die Längsachse 8 und den Reinigungsschlauch 6 wird gleichzeitig der Schwenkarm 9 um den vorderen Endbereich 6a des Reinigungsschlauchs 6 und um die Düse 3 beziehungsweise die Düsenachse 3a gedreht, wobei sich die fest mit dem vorderen Endbereich 6a des Reinigungsschlauchs 6 verbundene Düse 3 selbst nicht um die eigene Achse 3a dreht. Für Unterstützung der Drehbewegung des Gehäuseteils 7b und des Schwenkarms 9 um den Reinigungsschlauch 6 und die Düse 3 beziehungsweise die Düsenachse 3a sind zwei Kugellager 25 zwischen dem Reinigungsschlauch 6 und dem Gehäuse 7 sowie ein im Bereich der Düse 3 um den Endabschnitt 6a angeordnetes Kugellager 26 angebracht. Die Kugellager 25, 26 sind als Lagerungen 25, 26 Mittel zur Vermeidung einer Torsion des Reinigungsschlauchs 6. Es sind auch andere Arten von Lagerungen möglich. Die **Figur 3** stellt den Vorgang der Drehung des Gehäuseteils 7b und des Schwenkantriebs 11 um den Reinigungsschlauch 6 schematisch, das heißt vereinfacht, dar. So fehlen in dieser Darstellung beispielsweise die Kamera sowie Teile des Schwenkantriebs 11, die die Sicht auf den Endbereich 6a des Reinigungsschlauchs 6 verdecken würden. Die **Figur 3** stellt mit den beiden Positionen A und B eine Drehbewegung 14 des Gehäuseteils 7b um den feststehenden Reinigungsschlauch 6 und die Längsachse 8 um einen Winkel von > 180 ° dar. Die sichtbaren Teile des Schwenkantriebs 11 in den Positionen A und B sind nicht identisch, es handelt sich um gegenüberliegende Schwenkarme 9, wobei in jeder Position A und B jeweils ein Schwenkarm weggelassen wurde, der die Sicht auf den vorderen Endbereich 6a des Reinigungsschlauchs 6 behindern würde. Der Reinigungsschlauch 6 selbst und auch die fest mit ihm verbundene Düse 3 rotieren nicht um die Schlauchachse 22. In den Darstellungen der Drehpositionen A und B der **Figur 3** wird dies an Hand des sich nicht verdrehenden Bezugspunktes 27 auf dem Umfang des Reinigungsschlauchs 6 verdeutlicht. Durch die in **Figur 3** erkennbare Drehung des Schwenkantriebs 11 um den Reinigungsschlauch 6 um >180° bildet sich die Biegung des Endbereichs 6a des Reinigungsschlauchs 6 in einer der Drehposition A beziehungsweise B des Schwenkantriebs 11 um den Reinigungsschlauch 6 entsprechenden Biegungsebene aus. Die Biegungsebenen unterscheiden sich für beide Drehpositionen A und B in der **Figur 3****,** da eine Drehung um >180° erfolgte. Es unterscheiden sich auch die Biegungsrichtungen 23 bei den Positionen A und B. So wird der Endbereich 6a in Position A bezüglich der Längsachse 8 nach oben ausgelenkt, während der Endbereich 6a in Position B bezüglich der Längsachse 8 nach unten ausgelenkt wird, ohne dass der Bezugspunkt 27 des Reinigungssschlauchs 6 verdreht wird.

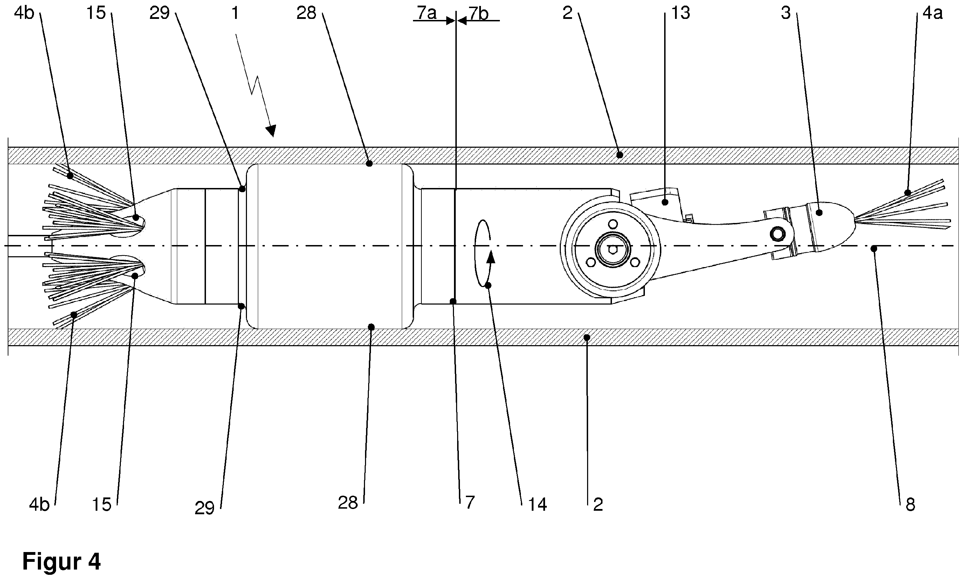

Die **Figur 4** zeigt die Vorrichtung 1 zur Reinigung eines Rohres 2 mit einer aktivierten Festsetzungseinheit 28, das heißt einer Festsetzungseinheit 28 im expandierten Zustand. Um dem Rückstoß durch den vorderen Strahl 4a der Düse 3 entgegenzuwirken beziehungsweise der axialen Vorschubbewegung durch die Hochdruckstrahlen 4b aus den nach hinten gerichteten Bohrungen 15 entgegenzuwirken, ist die expandierbare Festsetzungseinheit 28 an der Außenwand 29 eines hinsichtlich einer Rotation 14 um die Längsachse 8 nicht drehbaren Teils 7a des Gehäuses 7 vorgesehen, der sich im Bereich zwischen dem drehbaren Teil 7b des Gehäuse 7 und den Bohrungen 15 befindet. Die Festsetzungseinheit 28 ist pneumatisch, hydraulisch oder elektrisch aktivierbar. Durch die Expansion der Festsetzungseinheit 28 bis an die Innenwände des Rohres 2 erfolgt ein Verpressen der Festsetzungseinheit 28 im Rohr 2 und damit ein Fixieren der Vorrichtung 1.

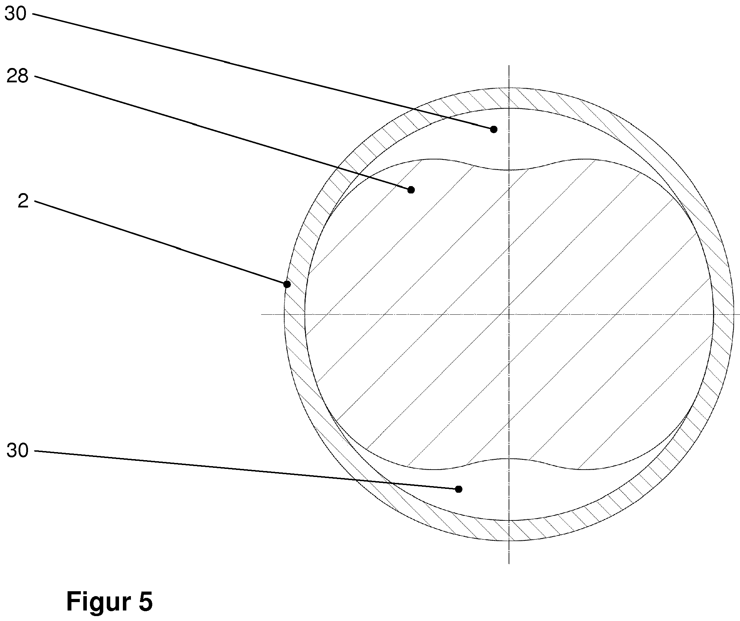

In der **Figur 5** ist der Querschnitt der in einem Rohr 2 verpressten Festsetzungseinheit 28 dargestellt. Dabei sind durch die Form der expandierten Festsetzungseinheit 28 Aussparungen 30 zwischen der Außenfläche der Festsetzungseinheit 28 und der Innenwand der Rohres 2 vorgesehen. Dies ermöglicht eine Durchströmung des Rohres 2 mit dem fluiden Reinigungsmedium 5 und den Verschmutzungen auch bei einer expandierten, verpressten Festsetzungseinheit 28.

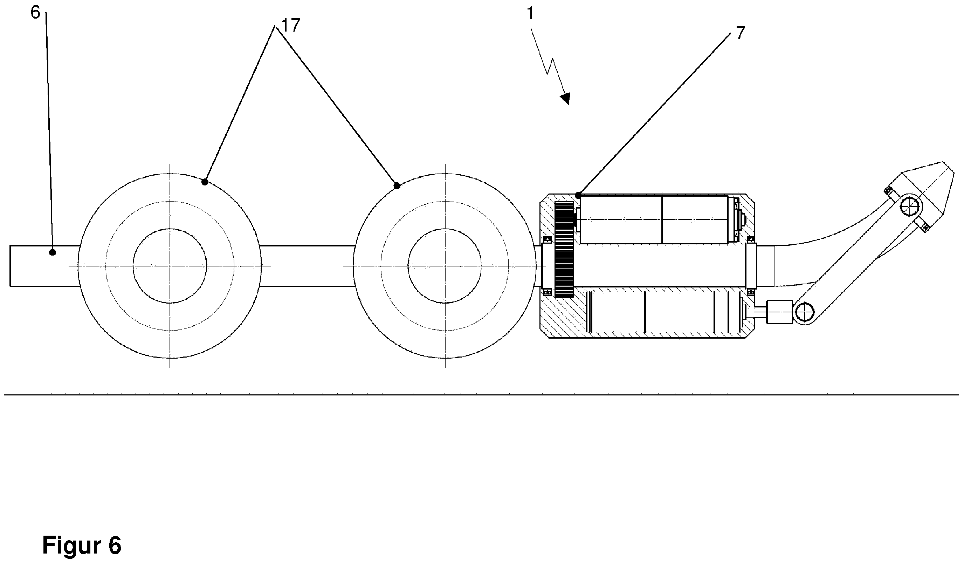

Die **Figur 6** zeigt eine Vorrichtung 1 zur Reinigung von Rohren, bei der am Reinigungsschlauch 6 hinter dem Gehäuse 7 ein Fahrantrieb mit Rädern 17 angebracht ist. Diese dienen der Unterstützung einer axialen Bewegung des Reinigungsschlauchs 6 und der Vorrichtung 1 durch das Rohr 2. Der Fahrantrieb stellt sicher, dass die Vorrichtung 1 in großen Rohren 2 selbstfahrend bewegbar ist.

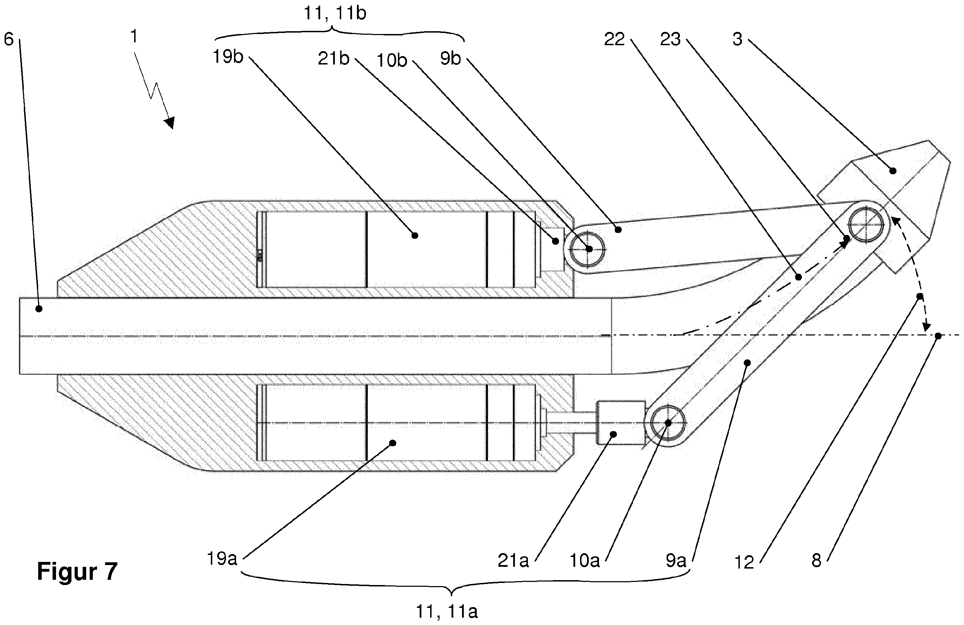

Die **Figur 7** zeigt eine Längschnitt-Darstellung einer Vorrichtung 1 zur Reinigung eines Rohres mit einer alternativen Ausgestaltung der Einrichtung für die Auslenkung der Düse 3 um die Längsachse 8. Die Einrichtung für die Auslenkung der Düse 3 um die Längsachse umfasst eine Mehrzahl von um den Reinigungsschlauch 6 herum positionierten Schwenkantrieben 11a, 11b. In der schematischen, das heißt stark vereinfachten Darstellung in der **Figur 7** ist ein erster Schwenkantrieb 11a unterhalb der Längsachse 8 und ein zweiter Schwenkantrieb 11b oberhalb der Längsachse 8 platziert. Jeder Schwenkantrieb 11a, 11b wird durch einen Schwenkarm 9a, 9b, eine Schwenkachse 10a, 10b und einen Schwenkantriebsmotor 19a, 19b gebildet. Durch die Schwenkbewegung 12 des Schwenkarms 9a, 9b ist der vordere Endbereich 6a des Reinigungsschlauchs 6 mit der damit fest verbundenen Düse 3 bewegbar, das heißt auslenkbar bezüglich der Längsachse 8. Die Schwenkantriebsmotoren 19a, 19b sind gemäß dem in **Figur 7** gezeigten Ausführungsbeispiel Spindelmotoren 19a, 19b mit jeweils einer linear beweglichen Spindelmutter 21a, 21b. Die lineare Bewegung der Spindelmutter 21a im gemäß **Figur 7** aktiven Schwenkantrieb 11a hat eine Schwenkbewegung des Schwenkarms 9a um die Schwenkachse 10a und damit eine Schwenkbewegung 12 beziehungsweise Auslenkung 12 der Düse 3 in einem Winkel zur Längsachse 8 unter Biegung des Endbereichs 6a des Reinigungsschlauchs 6 und von dessen Schlauchachse 22 mit einer Biegungsrichtung 23 in einer Biegungsebene zur Folge, wobei in **Figur 7** die Schlauchachse 22 entlang einer vertikal ausgerichteten Biegungsebene gebogen ist. Der Pfeil an der gebogenen Schlauchachse 22 zeigt eine Biegungsrichtung 23 in der vertikalen Ebene an, die nach oben verläuft.

Jeder einzelne Schwenkantrieb 11a, 11b stellt somit eine Schwenkeinrichtung 11 im Sinne der vorliegenden Erfindung dar beziehungsweise ist Teil von dieser. Die Mehrzahl der Schwenkantriebe 11a, 11b und die damit verbundene Möglichkeit der Auswahl eines bestimmten Schwenkantriebs 11a, 11b mit einer bestimmten Biegungsebene und Biegungsrichtung 23 des vorderen Endbereichs 6a des Reinigungsschlauchs 6 ermöglicht darüber hinaus eine Auslenkung der Düse 3 um die Längsachse 8. Somit ist in dieser Ausführungsform jeder Schwenkantrieb sowohl Schwenkeinrichtung beziehungsweise Teil der Schwenkeinrichtung 11 als auch Teil der Einrichtung für die Auslenkung der Düse 3 um die Längsachse 8.

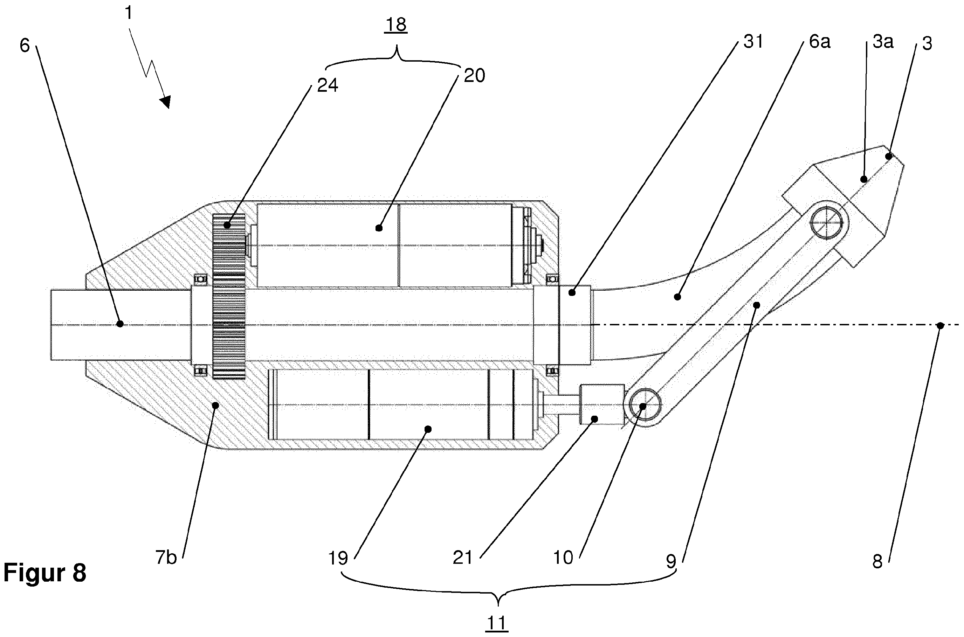

Die **Figur 8** zeigt wie schon die Figur 2 die Längsschnittdarstellung einer Vorrichtung 1 zur Reinigung von Rohren mit einer Detailansicht eines Schwenkantriebs 11, umfassend einen Spindelmotor 19, eine Spindelmutter 21, eine Schwenkachse 10 und einen Schwenkarm 9 sowie eines Drehantriebs 18 für die Drehung des Gehäuses 7b und des Schwenkantriebs 11 um den Reinigungsschlauch 6, umfassend einen Drehantriebsmotor 20 und ein Zahnradgetriebe 24. Anders als in der Vorrichtung nach Figur 2 ist in der Vorrichtung 1 gemäß **Figur 8** an der Befestigungsstelle des Schwenkantriebs 11 beziehungsweise des Schwenkarms 9 im Bereich der Düse 3 am vorderen Endbereich 6a des Reinigungsschlauchs 6 kein Kugellager angebracht. Somit ist der Schwenkantrieb 11 beziehungsweise der Schwenkarm 9 in diesem Fall nicht rotierbar um die Düse 3 beziehungsweise die Düsenachse 3a und um den vorderen Endbereich 6a des Reinigungsschlauchs 6 ausgebildet, sondern fest mit der Düse 3 beziehungsweise dem vorderen Endbereich 6a verbunden. Im Unterschied zu der Vorrichtung in Figur 2 ist gemäß **Figur 8** eine Drehdurchführung 31 zwischen zwei Schlauchabschnitten vorgesehen. Im in **Figur 8** gezeigten Ausführungsbeispiel ist die Drehdurchführung 31 zwischen dem vorderen Endbereich 6a des Reinigungsschlauchs 6 und dem übrigen Teil des Reinigungsschlauchs 6 positioniert. Die Drehdurchführung 31 kann aber auch an anderer Stelle zwischen zwei Schlauchabschnitten oder zwischen der Düse 3 und dem Reinigungsschlauch 6 angeordnet sein. Die Drehdurchführung 31 ermöglicht, unabhängig davon, an welcher Stelle sie platziert ist, letztendlich eine Rotation der Düse 3 um die Längsachse 8 ohne Torsion des Reinigungsschlauchs 6. Mit anderen Worten: Eine Torsion des Reinigungsschlauchs 6 bei der Drehung des Schwenkantriebs 11 um den Reinigungsschlauch 6 wird durch die aufgrund der Drehdurchführung 31 ermöglichte Rotationsbewegung der Düse 3 beziehungsweise des vorderen Endbereichs 6a um die Längsachse 8 verhindert.

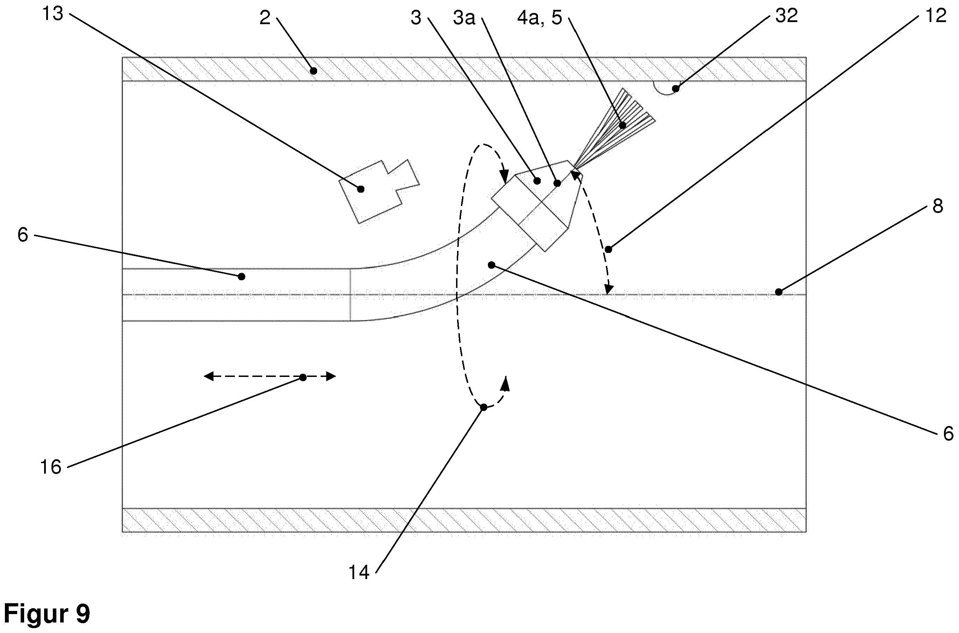

Die **Figur 9** zeigt schematisch die punktuelle Ausrichtung der Düse 3 auf eine Verschmutzung 32 an der Innenwand des Rohrs 2 unter Kamerabeobachtung. Eine solche punktuelle Ausrichtung der Düse 3 beziehungsweise des Strahls 4a des Reinigungsmediums 5 aus der Düse 3 auf eine Verschmutzung 32 ist durch die in den Figuren 1 bis 8 detailliert dargestellten Vorrichtungen 1 möglich. So ist die Düse 3 in einer ersten Dimension, nämlich in axialer Richtung durch die Vorschubbewegung 16 ausrichtbar. Die Schwenkbewegung 12, mit der die Düse 3 beziehungsweise Düsenachse 3a in einem Winkel zur Längsachse 8 auslenkbar ist, stellt eine zweite Dimension dar. Mit der Einrichtung für die Auslenkung der Düse 3 um die Längsachse 8 ist eine dritte Dimension für die Ausrichtung der Düse 3 möglich, die zwar einer Rotationsbewegung 14 um die Längsachse 8 entspricht, jedoch zeigen die Vorrichtungen 1 aus den Figuren 2, 7 und 8, dass eine derartige Auslenkung der Düse 3 um die Längsachse 8 auch ohne eine Torsion des Reinigungsschlauchs 6 möglich ist. Ebenso ist bei einer solchen Vorrichtung 1 die Kamera 13 auslenk- und ausrichtbar, so dass sowohl die Erfassung von Verschmutzungen 32 als auch die Beobachtung der Auslenkung 12 der Düse 3 und deren Ausrichtung um die Längsachse 8 erleichtert wird.

### Bezugszeichenliste

- 1: Vorrichtung
- 2: Rohr
- 3: Düse
- 3a: Düsenachse, Achse der Düse 3
- 4a: (vorderer) Strahl
- 4b: nach hinten gerichtete Strahlen (des fluiden Reinigungsmediums 5), Hochdruckstrahlen
- 5: fluides Reinigungsmedium, Reinigungsflüssigkeit, Wasser
- 6: Reinigungsschlauch, Hochdruckreinigungsschlauch
- 6a: vorderer Endbereich des Reinigungsschlauchs 6
- 7: Gehäuse
- 7a: nicht drehbarer Teil des Gehäuses 7, Gehäuseteil
- 7b: drehbarer Teil des Gehäuses 7, Gehäuseteil
- 8: Längsachse
- 9: Schwenkarm
- 9a: Schwenkarm (des Schwenkantriebs 11a)
- 9b: Schwenkarm (des Schwenkantriebs 11b)
- 10: Schwenkachse
- 10a: Schwenkachse (des Schwenkantriebs 11a)
- 10b: Schwenkachse (des Schwenkantriebs 11b)
- 11: Schwenkeinrichtung, Schwenkantrieb
- 11a: Schwenkantrieb (aktiviert)
- 11b: Schwenkantrieb (nicht aktiviert)
- 12: Schwenkbewegung, Auslenkung (der Düse 3), Schwenkrichtung
- 13: Kamera
- 14: Rotation (um die Längsachse 8), Rotationspfeil, Drehbewegung, Rotationsbewegung, Auslenkung um die Längsachse 8
- 15: Bohrungen
- 16: Vorschubbewegung, (axialer) Vorschub, axiale Bewegung
- 17: Räder
- 18: Drehantrieb
- 19: Schwenkantriebsmotor, Spindelmotor
- 19a: Schwenkantriebsmotor, Spindelmotor
- 19b: Schwenkantriebsmotor, Spindelmotor
- 20: Drehantriebsmotor
- 21: Spindelmutter
- 21a: Spindelmutter (des Schwenkantriebs 11a)
- 21b: Spindelmutter (des Schwenkantriebs 11b)
- 22: Schlauchachse
- 23: Biegungsrichtung
- 24: Zahnradgetriebe
- 24a: erstes Zahnrad (auf der Drehachse des Dehantriebsmotors 20
- 24b: zweites Zahnrad (Zahnrad, das innerhalb des Gehäuses 7 am Umfang des Reinigungsschlauchs 6 befestigt ist)
- 25: Kugellager, Lagerung
- 26: Kugellager, Lagerung
- 27: Bezugspunkt
- 28: Festsetzungseinheit
- 29: Außenwand des Gehäuseteils 7a
- 30: Aussparungen (der Festsetzungseinheit 28)
- 31: Drehdurchführung
- 32: Verschmutzungen, beliebiger Punkt auf der Innenwand des Rohres

## Patentansprüche

1. Vorrichtung (1) zum Reinigen von Rohren (2), umfassend
• eine relativ zur Innenwand eines Rohrs (2) in mindestens drei Achsen bewegbare Düse (3) zur Erzeugung eines Strahls (4a) eines fluiden Reinigungsmediums (5) auf einen beliebigen Punkt (32) der Innenwand des Rohrs (2),
• einen an die Düse (3) angeschlossenen Reinigungsschlauch (6) für die Zufuhr des fluiden Reinigungsmediums (5), wobei die Düse (3) an einem vorderen Endbereich (6a) des Reinigungsschlauchs (6) angebracht ist und die Düse (3) mit dem angeschlossenen Reinigungsschlauch (6) entlang einer parallel zur Rohrachse verlaufenden Längsachse (8) innerhalb des Rohrs (2) eine axiale Bewegung (16) ausführen kann,
• mindestens eine Schwenkeinrichtung (11) für die Auslenkung (12) der Düse (3) in einem Winkel zur Längsachse (8), vorzugsweise zwischen 0° und ± 90°, unter Biegung des vorderen Endbereichs (6a) des Reinigungsschlauchs (6) und von dessen Schlauchachse (22) mit einer Biegungsrichtung (23) in einer Biegungsebene,
• mindestens eine Einrichtung für die Auslenkung (14) der Düse (3) um die Längsachse (8) durch Änderung der Biegungsrichtung (23) und der Biegungsebene des vorderen Endbereichs (6a) um die Längsachse (8), und
• mindestens eine Kamera (13) für die Erfassung von Verschmutzungen (32) und die Beobachtung der Auslenkung und Ausrichtung der Düse (3),
**dadurch gekennzeichnet, dass** die Einrichtung für die Auslenkung (14) der Düse (3) um die Längsachse (8) mindestens einen Drehantrieb (18) für die Drehung der Schwenkeinrichtung (11) um den Reinigungsschlauch (6) und um die Düse (3) umfasst, wodurch die Biegung des vorderen Endbereichs (6a) in einer der jeweiligen Drehposition der Schwenkeinrichtung (11) um den Reinigungsschlauch (6) entsprechenden Biegungsebene und Biegungsrichtung (23) erfolgt, ohne Torsion des Reinigungsschlauchs (6), **und dass** mindestens eine Lagerung (25, 26) für die Schwenkeinrichtung (11) am Reinigungsschlauch (6) und der Düse (3) vorgesehen ist, mittels der die Schwenkeinrichtung (11) um den Reinigungsschlauch (6) und um dessen vorderen Endbereich (6a) und um die Düse (3) ohne Torsion des Reinigungsschlauchs (6) drehbar ist.

2. Vorrichtung (1) nach Anspruch 1, **dadurch gekennzeichnet, dass** die Einrichtung für die Auslenkung (14) der Düse (3) um die Längsachse (8) mindestens eine Drehdurchführung (31) zwischen Düse (3) und dem vorderen Endbereich (6a) des Reinigungsschlauchs (6) oder an beliebiger Stelle zwischen zwei Schlauchabschnitten des Reinigungsschlauchs (6) umfasst, wodurch die Düse (3) um die Längsachse (8) ohne Torsion des Reinigungsschlauchs (6) rotierbar ist.

3. Vorrichtung (1) nach einem der Ansprüche 1 oder 2, **dadurch gekennzeichnet, dass** die Kamera (13) mit einem Schwenkantrieb (11) als Schwenkeinrichtung (11) derart verbunden ist, dass sie durch den Schwenkantrieb (11) schwenkbar in der Schwenkrichtung (12) ist und zusammen mit dem Schwenkantrieb (11) eine Rotation (14) ausführt und dass die Kamera (13) eine Einheit für eine Kamerareinigung aufweist.

4. Vorrichtung (1) nach einem der Ansprüche 1 bis 3, **dadurch gekennzeichnet, dass** diese ein Gehäuse (7) umfasst, durch das der Reinigungsschlauch (6) entlang oder parallel zur Längsachse (8) hindurchgeführt ist und dass das Gehäuse (7) zumindest mit einem Gehäuseteil (7b) um die Längsachse (8) drehbar ausgebildet ist und eine Verbindung mit einem Schwenkantrieb (11) als Schwenkeinrichtung (11) aufweist, derart, dass eine Drehbewegung (14) des Gehäuseteils (7b) zu einer entsprechenden Drehbewegung (14) des Schwenkantriebs (11) um die Längsachse (8) führt.

5. Vorrichtung (1) nach einem der Ansprüche 1 bis 4, **dadurch gekennzeichnet, dass** für einen axialen Vorschub (16) der Düse (3) entlang der Längsachse (8) ein oder mehrere axiale Antriebe vorgesehen sind.

6. Vorrichtung (1) nach Anspruch 5, **dadurch gekennzeichnet, dass** der axiale Vorschub (16) eine oder mehrere nach hinten gerichtete Bohrungen (15) oder Düsen umfasst, zu denen das fluide Reinigungsmedium (5) zuführbar ist und mittels denen eine auf dem Rückstoßprinzip beruhende Vorschubbewegung (16) der Vorrichtung (1) durch das aus den Bohrungen (15) oder Düsen ausströmende fluide Reinigungsmedium (5) erzeugbar ist.

7. Vorrichtung (1) nach Anspruch 6, **dadurch gekennzeichnet, dass** ein Ventil für eine geregelte oder gesteuerte Verteilung des fluiden Reinigungsmediums (5) zwischen der vorderen Düse (3) und den nach hinten gerichteten Bohrungen (15) oder Düsen vorgesehen ist.

8. Vorrichtung (1) nach einem der Ansprüche 1 bis 7, **dadurch gekennzeichnet, dass** der axiale Vorschub (16) der Vorrichtung (1) durch eine axiale Bewegung des Reinigungsschlauchs (6) erfolgt.

9. Vorrichtung nach einem der Ansprüche 1 bis 8, **dadurch gekennzeichnet, dass** die Vorrichtung (1) in axialer Richtung expandierbar ausgebildet ist, so dass ein axialer Vorschub (16) der Düse (3) parallel zur Längsachse (8) realisiert werden kann.

10. Vorrichtung (1) nach einem der Ansprüche 1 bis 9, **dadurch gekennzeichnet, dass** Räder (17) zur Unterstützung des axialen Vorschubs (16) der Vorrichtung (1) vorgesehen sind.

11. Vorrichtung (1) nach einem der Ansprüche 1 bis 10, **dadurch gekennzeichnet, dass** ein Fahrantrieb mit Rädern (17) vorgesehen ist, so dass ein axialer Vorschub (16) der Düse (3) erfolgen kann.

## Claims

1. Device (1) for cleaning pipes (2), comprising
• a nozzle (3) movable in at least three axes relative to the inside wall of a pipe (2) for the generation of a jet (4a) of a fluid cleaning medium (5) onto a desired point (32) on the inside wall of the pipe (2),
• a cleaning hose (6) connected to the nozzle (3) for supplying the fluid cleaning medium (5), wherein the nozzle (3) is attached to a front end zone (6a) of the cleaning hose (6) and the nozzle (3) with the connected cleaning hose (6) can complete an axial movement (16) along a longitudinal axis (8) running parallel to the axis of the pipe (8) within the pipe (2),
• at least one swivel mechanism (11) for the deflection (12) of the nozzle (3) at an angle to the longitudinal axis (8), preferably between 0° and ± 90°, while bending the front end zone (6a) of the cleaning hose (6) and of its hose axis (22) with a bending direction (23) in a bending plane,
• at least one mechanism for the deflection (14) of the nozzle (3) around the longitudinal axis (8) through a change in the direction of bending (23) and of the bending plane of the front end zone (6a) around the longitudinal axis (8), and
• at least one camera (13) for the detection of soiling (32) and the monitoring of the deflection and alignment of the nozzle (3),
**characterised in that** the mechanism for the deflection (14) of the nozzle (3) around the longitudinal axis (8) comprises at least one rotary drive unit (18) for rotating the swivel mechanism (11) around the cleaning hose (6) and around the nozzle (3), by means of which the bending of the front end zone (6a) takes place in a bending plane and bending direction (23) corresponding to the relevant rotational position of the swivel mechanism (11) around the cleaning hose (6),
without torsion of the cleaning hose (6), **and that** at least one bearing (25, 26) is provided for the swivel mechanism (11) on the cleaning hose (6) and the nozzle (3), by means of which the swivel mechanism (11) is capable of being rotated around the cleaning hose (6) and around its front end zone (6a) and around the nozzle (3) without torsion of the cleaning hose (6).

2. Device (1) in accordance with Claim 1, **characterised in that** the mechanism for the deflection (14) of the nozzle (3) around the longitudinal axis (8) comprises at least one rotary joint (31) between nozzle (3) and the front end zone (6a) of the cleaning hose (6) or on a desired point between two hose sections of the cleaning hose (6), by means of which the nozzle (3) is rotatable around the longitudinal axis (8) without torsion of the cleaning hose (6).

3. Device (1) in accordance with one of Claims 1 or 2, **characterised in that** the camera (13) is connected to a swivel drive unit (11) as a swivel mechanism (11) in such a way that it is capable of being swivelled by the swivel drive unit (11) in the direction of swivel (12), and together with the swivel drive unit (11) performs a rotation (14) and that the camera (13) has a unit for camera cleaning.

4. Device (1) in accordance with one of Claims 1 to 3, **characterised in that** this contains a housing (7) through which the cleaning hose (6) is passed along or parallel to the longitudinal axis (8) and that the housing (7) is designed rotatable at least with one housing part (7b) around the longitudinal axis (8) and has a connection to a swivel drive unit (11) as a swivel mechanism (11), in such a way that a rotary movement (14) of the housing part (7b) leads to a corresponding rotary movement (14) of the swivel drive (11) around the longitudinal axis (8).

5. Device (1) in accordance with one of Claims 1 to 4, **characterised in that** for an axial forward feed (16) of the nozzle (3) along the longitudinal axis (8), one or more axial drive units are provided.

6. Device (1) in accordance with Claim 5, **characterised in that** the axial forward feed system (16) comprises one or more rearward drilled holes (15) or nozzles to which the fluid cleaning medium (5) can be supplied and by means of which an forward feed movement (16) of the device (1) based on the recoil principle can be generated through the cleaning medium (5) flowing out of the drilled holes (15) or nozzles.

7. Device (1) in accordance with Claim 6, **characterised in that** a valve is provided for a regulated or controlled distribution of the fluid cleaning medium (5) between the front nozzle (3) and the rearward drilled holes (15) or nozzles.

8. Device (1) in accordance with one of Claims 1 to 7, **characterised in that** the axial forward feed (16) of the device (1) takes place through an axial movement of the cleaning hose (6).

9. Device in accordance with one of Claims 1 to 8, **characterised in that** the device (1) is designed expandable in an axial direction so that an axial forward feed (16) of the nozzle (3) parallel to the longitudinal axis (8) can be achieved.

10. Device (1) in accordance with one of Claims 1 to 9, **characterised in that** wheels (17) are provided to support the axial forward feed (16) of the device (1).

11. Device (1) in accordance with one of Claims 1 to 10, **characterised in that** a drive mechanism with wheels (17) is provided so that an axial forward feed (16) of the nozzle (3) can take place.

## Revendications

1. Dispositif (1) pour le nettoyage de tuyaux (2), comprenant
• une buse (3) mobile sur au moins trois axes par rapport à la paroi intérieure d'un tuyau (2) permettant de produire un jet (4a) de fluide de nettoyage (5) en un point quelconque (32) de la paroi intérieure du tuyau (2),
• un flexible de nettoyage (6) raccordé à la buse (3) pour l'alimentation en fluide de nettoyage (5), la buse (3) étant montée à l'extrémité avant (6a) du flexible de nettoyage (6) et la buse (3) pouvant effectuer, avec le flexible de nettoyage (6) raccordé, un mouvement axial (16) à l'intérieur du tuyau (2) le long d'un axe longitudinal (8) parallèle à l'axe du tuyau,
• au moins un dispositif d'articulation (11) pour l'orientation (12) de la buse (3) selon un angle par rapport à l'axe longitudinal (8), de préférence entre 0° et ±90°, avec flexion de l'extrémité avant (6a) du flexible de nettoyage (6) et de son axe (22) dans un sens de flexion (23) et un plan de flexion,
• au moins un dispositif pour l'orientation (14) de la buse (3) autour de l'axe longitudinal (8) en modifiant le sens de flexion (23) et le plan de flexion de l'extrémité avant (6a) autour de l'axe longitudinal (8),
• au moins une caméra (13) pour la localisation des impureté (32) et l'observation de l'orientation de la buse (3),
**caractérisé en ce que** le dispositif d'orientation (14) de la buse (3) autour de l'axe longitudinal (8) comprend au moins un entraînement rotatif (18) pour la rotation du dispositif d'articulation (11) autour du flexible de nettoyage
(6) et autour de la buse (3), la flexion de l'extrémité avant (6a) intervenant dans l'une des positions de rotation du dispositif d'articulation (11) autour du flexible de nettoyage (6) en fonction du plan de flexion et du dispositif de flexion (23) sans torsion du flexible de nettoyage (6) **et en ce qu'**au moins un logement (25, 26) est prévu pour le dispositif d'articulation (11) sur le flexible de nettoyage (6) et la buse (3), grâce auquel le dispositif d'articulation (11) autour du flexible de nettoyage (6), de son extrémité avant (6a) et de la buse (3) peut être tourné sans torsion du flexible de nettoyage (6).

2. Dispositif (1) selon la revendication 1, **caractérisé en ce que** le dispositif d'orientation (14) de la buse (3) autour de l'axe longitudinal (8) comprend au moins un passage rotatif (31) entre la buse (3) et l'extrémité avant (6a) du flexible de nettoyage (6) ou à un endroit quelconque entre deux sections du flexible de nettoyage (6), la buse (3) pouvant être pivotée autour de l'axe longitudinal (8) sans torsion du flexible de nettoyage (6).

3. Dispositif (1) selon l'une des revendications 1 ou 2, **caractérisé en ce que** la caméra (13) est associée à un entraînement d'articulation (11) en tant que dispositif d'articulation (11) de telle manière qu'elle peut être inclinée, grâce à l'entraînement d'articulation (11), dans le sens de pivotement (12) et effectue une rotation (14) avec l'entraînement d'articulation (11) et **en ce que** la caméra (13) est dotée d'une unité pour son nettoyage.

4. Dispositif (1) selon l'une de revendications 1 à 3, **caractérisé en ce qu**'il comprend un boîtier (7) à travers lequel le flexible de nettoyage (6) passe le long de l'axe longitudinal (8) ou parallèlement à celui-ci et en ce que le boîtier (7) peut tourner, au moins en partie (7b), autour de l'axe longitudinal (8) et est connecté à un entraînement rotatif (11) en tant que dispositif de rotation (11) de telle sorte qu'un mouvement de rotation (14) de la partie du boîtier (7b) entraîne un mouvement de rotation (14) de l'entraînement de rotation (11) autour de l'axe longitudinal (8).

5. Dispositif (1) selon l'une des revendications 1 à 4, **caractérisé en ce qu**'un ou plusieurs entraînements axiaux sont prévus pour une avancée axiale (16) de la buse (3) le long de l'axe longitudinal (8).

6. Dispositif (1) selon la revendication 5, **caractérisé en ce que** l'avancée axiale (16) comprend un ou plusieurs trous (15) ou buses orientés vers l'arrière permettant l'alimentation en fluide de nettoyage (5) et permettant de générer, sur la base du principe de réaction, un mouvement d'avancée (16) du dispositif (1) grâce au fluide de nettoyage (5) s'écoulant des trous (15) ou des buses.

7. Dispositif (1) selon la revendication 6, **caractérisé en ce qu'**une valve est prévue pour la distribution régulée ou commandée du fluide de nettoyage (5) entre la buse avant (3) et les trous (15) ou buses orientés vers l'arrière.

8. Dispositif (1) selon l'une des revendications 1 à 7, **caractérisé en ce que** l'avancée axiale (16) du dispositif (1) est générée du fait d'un mouvement axial du flexible de nettoyage (6).

9. Dispositif selon l'une des revendications 1 à 8, **caractérisé en ce que** le dispositif (1) peut être étendu dans le sens axial de manière à générer une avancée axiale (16) de la buse (3) parallèlement à l'axe longitudinal (8).

10. Dispositif (1) selon l'une des revendications 1 à 9, **caractérisé en ce que** des roues (17) sont prévue pour assurer l'avancée axiale (16) du dispositif (1).

11. Dispositif (1) selon l'une des revendications 1 à 10, **caractérisé en ce que** un entraînement avec roues (17) est prévu pour l'avancée axiale (16) de la buse (3).
